(19) Europäisches Patentamt
European Patent Office
Office européen des brevets

(11) **EP 0 898 670 B1**

(12) **EUROPÄISCHE PATENTSCHRIFT**

(45) Veröffentlichungstag und Bekanntmachung des Hinweises auf die Patenterteilung:
**09.08.2000 Patentblatt 2000/32**

(21) Anmeldenummer: **97923933.2**

(22) Anmeldetag: **17.05.1997**

(51) Int Cl.[7]: **F16H 61/14**, F16H 61/06

(86) Internationale Anmeldenummer:
**PCT/EP97/02541**

(87) Internationale Veröffentlichungsnummer:
**WO 97/44599 (27.11.1997 Gazette 1997/51)**

(54) **REGELUNG ZUM SCHLIESSEN EINER REIBSCHLUSSVERBINDUNG**

FRICTIONAL ENGAGEMENT CONTROL

SYSTEME DE REGULATION POUR REALISER UN ACCOUPLEMENT A FRICTION

(84) Benannte Vertragsstaaten:
**DE FR GB**

(30) Priorität: **21.05.1996 DE 19620328**

(43) Veröffentlichungstag der Anmeldung:
**03.03.1999 Patentblatt 1999/09**

(73) Patentinhaber: **ZF FRIEDRICHSHAFEN Aktiengesellschaft**
**88038 Friedrichshafen (DE)**

(72) Erfinder:
• **KNAPP, Thomas**
**D-63791 Karlstein (DE)**
• **DANZ, Wolfgang**
**D-88046 Friedrichshafen (DE)**

(74) Vertreter: **Zietlow, Karl-Peter et al**
**ZF FRIEDRICHSHAFEN AG**
**88038 Friedrichshafen (DE)**

(56) Entgegenhaltungen:
**EP-A- 0 492 199          EP-A- 0 644 361**
**EP-B- 0 436 978          DE-A- 3 812 673**
**DE-A- 19 501 671          DE-C- 19 511 996**

**Beschreibung**

Die Erfindung befaßt sich mit einer Regelung zum Schließen einer Reibschlußverbindung im Antriebsstrang bei einem Kraftfahrzeug nach dem Oberbegriff von Anspruch 1.

In der Regel besteht ein Automatgetriebe aus einem hydrodynamischen Wandler, mindestens einem Planetenradsatz und mindestens zwei schaltbaren Reibschlußverbindungen zur Drehmomentübertragung. Diese Reibschlußverbindungen können Reibungskupplungen bzw. Getriebebremsen sein. Sie werden hydraulisch geschlossen und mittels einer Rückstellfeder wieder geöffnet. Stufenautomatgetriebe haben in der Regel mehrere Planetenradsätze, um mehrere Vorwärtsgänge schalten zu können.

Stufenlose Umschlingungsgetriebe haben einen Planetenradsatz vorgeschaltet, mit einem Sonnenrad, zwei in einander eingreifende Planetenrädern auf einem Planetenträger und einem Hohlrad zum Schalten von Vorwärts- und Rückwärtsfahrtrichtung und Leerlauf. Dabei greift ein Planetenrad in das Sonnenrad und das andere in das Hohlrad ein. Diese Getriebe besitzen einen hydrodynamischen Wandler als Anfahrhilfe. Zwischen diesem und dem Umschlingungsgetriebe ist eine Reibungskupplung angebracht, mit der die Vorwärtsfahrtrichtung geschaltet wird und die Drehmomentspitzen im Antriebsstrang durch Schlupf begrenzen soll, damit das Umschlingungsgetriebe nicht mit einem derart hohen Drehmoment belastet wird, das zu einem Durchrutschen des Kraftübertragungselements im Umschlingungsgetriebe führt und dieses stark verschleißt. Um beim Schalten der Fahrtrichtung keine Drehmomentspitzen zu erzeugen, die zu einem Durchrutschen des Kraftübertragungselements im Umschlingungsgetriebe führen und dieses stark verschleißen, muß die Fahrtrichtung sanft geschaltet werden, d. h. die Kupplung bzw. Bremse darf nicht schlagartig geschlossen werden. Darüber hinaus ist ein schlagartiges Schließen der Reibschlußverbindung aus Komfortgründen inakzeptabel. Wird in den Schließvorgang hinein gasgegeben, so muß allerdings diese Kupplung bzw. Bremse nicht nur sanft, sondern zugleich schnell geschlossen werden, damit der Motor bei Leistungsanforderung des Fahrers nicht unverhältnismäßig hochdreht. Das für jede mögliche Leistungsanforderung des Fahrers schnelle und sanfte Schließen der Reibungskupplung oder Getriebebremse erfordert eine Regelung.

Solche Regelungen sind bekannt, die europäische Patentschrift 0 436 978 B1 beschreibt eine Art einer Regelung zum Schließen einer Reibschlußverbindung. Diese Art von Regelungen müssen aber für verschiedene Motoren und Wandler einzeln in einem aufwendigen Verfahren abgestimmt werden.

Der Erfindung liegt die Aufgabe zugrunde, eine Regelung für das Schließen der Reibungskupplung bzw. der Getriebebremse, die den Kraftschluß zwischen Antriebseinheit und Antriebsstrang des Kraftfahrzeuges herstellt, zu schaffen, bei der die Abstimmung der Regelparameter nicht für jeden Motor- und Wandlertyp eigens in einem aufwendigen Verfahren erfolgen muß.

Diese Aufgabe wird mit einer, auch die kennzeichnenden Merkmale des Hauptanspruches aufweisenden gattungsgemäßen Regelung gelöst.

Nach erfolgtem Einstellen des Fahrtrichtungsvorwahlhebels auf Vorwärts- oder Rückwärtsfahrt wird der Betätigungszylinder der Reibungskupplung bzw. Getriebebremse des je nach gewünschter Fahrtrichtung geschalteten Antriebsstranges schnell mit Hydraulikflüssigkeit befüllt. Die anderen Betätigungszylinder der für dieser Fahrtrichtung zu lösenden Reibschlußverbindungen werden entleert. Diese Füllphase dauert an, bis die Kupplung oder Bremse zu greifen beginnt. Danach beginnt ein Drehmoment auf die Kupplung oder Bremse zu wirken, das eine Veränderung der Drehzahldifferenz zwischen Wandlerpumpen und -turbinenrad verursacht. Anhand dieser Drehzahldifferenzänderung läßt sich der Eingriffspunkt der Kupplung oder Bremse erkennen. Bei dem Schalten der Vorwärts- oder Rückwärtsfahrtrichtung aus dem Stand nimmt die Turbinenraddrehzahl im Vergleich zur Pumpenraddrehzahl ab.

Bei einem stufenlosen Umschlingungsgetriebe mit vorgeschaltetem Planetenradsatz ruht bei stillstehendem Kraftfahrzeug die Abtriebswelle und damit das Sonnenrad. Die Antriebswelle ist mit dem Planetenträger und der Primärseite der Reibungkupplung drehfest verbunden. Solange beim Schalten der Vorwärtsfahrtrichtung die Reibungskupplung noch nicht greift, ist die Drehzahl der Primärseite der Reibungskupplung und damit die Drehzahl des Wandlerturbinenrades durch die Verluste des hydrodynamischen Wandlers geringfügig niedriger als die Motordrehzahl - und damit die Drehzahl des Wandlerpumpenrades. Wird die Reibungskupplung beim Vorwärtsfahren geschlossen, so wirkt durch die einsetzende Reibungskraft ein Drehmoment auf beide Seiten der Kupplung. Das Drehmoment auf der Sekundärseite der Kupplung führt zum Anrollen des Kraftfahrzeuges, sobald die Haftreibung des Kraftfahrzeuges überwunden wird. Das Drehmoment auf der Primärseite der Kupplung ist gleich dem des Wandlerturbinenrades, da Kupplungsprimärseite und Wandlerturbinenrad drehfest verbunden sind. Mit steigendem Druck auf die Reibungskupplung nimmt die Drehzahldifferenz von Primär- und Sekundärseite der Kupplung ab und die Drehzahldifferenz von dem Pumpen- und Turbinenrad des Wandlers zu. Schließlich ist die Reibungskupplung ganz geschlossen und die Drehzahldifferenz Null. Die volle Drehzahldifferenz zwischen Motor und Getriebeeingang wirkt am Wandler. Drehmomentspitzen aus dem Antriebsstrang werden vom Wandler abgedämpft. Der Abfall der Motordrehzahl durch die Belastung des Wandlers wird von der Einspritzpumpe - falls vorhanden - weggeregelt. Die modellbasierende Regelung zum Schließen der Reibschlußverbindung bietet den Vorteil, daß die Regelung nicht für jeden für einen bestimmten Getriebetyp zulässigen Motor und Wandler eigens abgestimmt werden muß, sondern nur deren Kenngrößen als Parameter in den Regelalgorithmus eingegeben werden müssen. Die Reibungskupplung soll innerhalb vorgegebener Zeit geschlossen werden, d. h. die Differenzdrehzahl der Kupplunghälften auf Null abgebaut werden. Dieser Vorgang soll möglichst weich und komfortabel erfolgen.

Beim Rückwärtsanfahren wird die Getriebebremse geschlossen, die das Hohlrad mit dem Getriebegehäuse reibschlüssig verbindet. Die Reibungskupplung bleibt dabei offen. Beginnt die Bremse zu greifen, so nimmt der Planetenträger und damit das Wandlerturbinenrad Drehmoment auf. Infolge dessen steigt das auf das Pumpenrad des Wandlers wirkende Drehmoment und die Drehzahldifferenz von Pumpen- und Turbinenrad nimmt deutlich zu. Der Wandler beginnt im Bereich der Drehmomentüberhöhung zu arbeiten. Mit steigendem Druck auf die Getriebebremse nimmt die Drehzahl des Planetenträgers ab und die Drehzahldifferenz von dem Pumpen- und Turbinenrad des Wandlers zu. Schließlich ist die Bremse ganz geschlossen und die Drehzahl des Planetenträgers Null. Die volle Drehzahldifferenz zwischen Motor und Getriebeeingang wirkt am Wandler. Drehmomentspitzen aus dem Antriebsstrang werden vom Wandler abgedämpft. Das aus dem Drehmoment des Planetenträgers resultierende Drehmoment des Sonnenrades führt zum Rückwärts-Anrollen des Kraftfahrzeuges, sobald die Haftreibung des Kraftfahrzeuges überwunden wird.

In einer vorteilhaften Ausgestaltung der Erfindung gilt für das Modell zum geregelten Schließen einer Reibschlußverbindung folgendes gekoppelte Differentialgleichungssystem:

$$d\omega\_motor/dt = 1/\Theta\_motor \cdot [M\_ motor-M\_verbr-M\_p], \qquad (1)$$

$$d\omega\_turb/dt = 1/\Theta\_turb \cdot [M\_ turb-M\_k], \qquad (2)$$

mit:

| | |
|---|---|
| $\omega\_motor$ | Winkelgeschwindigkeit des Motors, |
| t | Zeit, |
| $\Theta\_motor$ und | Trägheitsmoment von Motor, Wandlerpumpenrad Verbindungswellen, |
| M_motor | Drehmoment des Motors, |
| M_verbr | Drehmoment der Nebenaggregat-Verbraucher, |
| M_p | Drehmoment des Wandlerpumpenrades, |
| $\omega\_turb$ | Winkelgeschwindigkeit des Wandlerturbinen rades, |
| $\Theta\_turb$ | Trägheitsmoment von Wandler-Turbine, Kupplungseingangsseite und Verbindungswellen, |
| M_turb | Drehmoment des Wandlerturbinenrades, |
| M_k | Drehmoment der Reibungskupplung, |

wobei die Kopplung der Differentialgleichungen durch die Wandlerkennlinle $\mu$ über die Beziehung

$$M\_turb = \mu \cdot M\_p = \mu(\nu) \cdot M\_p \qquad (3)$$

gegeben ist.
Dabei ist M_p seinerseits durch die Beziehung

$$M\_p = M\_p,ref(\nu) \cdot \omega^2\_motor/\omega^2\_ref \qquad (4)$$

gegeben.
$\omega\_ref$ ist dabei die Winkelgeschwindigkeit, bei der die Wandlerkennlinien $\mu(\nu)$ und M_p,ref($\nu$) vermessen werden. $\nu$ ist das Drehzahlverhältnis: $\nu = \omega\_turb/\omega\_motor$.

Bei einer konventionellen Lamellenkupplung wird das Drehmoment M_k der Reibungskupplung über die Beziehung

$$M\_k = \mu\_reib \cdot r \cdot z \cdot [A \cdot p\_k - F\_\varnothing] \qquad (5)$$

ermittelt, mit:

M_k      Drehmoment der Reibungskupplung,

μ_reib      Reibungskoeffizent der Reibungskupplung,

r      effektiver Reibradius,

z      Anzahl der Reibflächen,

A      Kolbenfläche des Betätigungszylinders der Rei bungskupplung,

p_k      Druck im Betätigungszylinder der Reibungskupp lung,

F_∅      Minimalkraft zur Drehmomentübertragung.

Diese Gleichung ist abhängig vom mechanischen Aufbau der Kupplung und muß bei Bedarf den technischen Gegebenheiten angepaßt werden.

Der Druck p_k im Betätigungszylinder der Reibungskupplung wird vorteilhaft durch ein Druckregelventil eingestellt, das über den Strom durch seine Magnetspule angesteuert wird. Die Abhängigkeit des Drucks p_k vom Spulenstrom I_k folgt einem bestimmten funktionalen Zusammenhang

$$p\_k = f(I\_k) \tag{6},$$

der in einer Kennlinie abgelegt ist.

Diese Gleichungen (1) - (6) werden nun im modellbasierten Regelkonzept eingearbeitet. Grundidee hierbei ist, anhand von Gleichung (2) das Kupplungsmoment M_k zu berechnen, welches einen gewünschten Gradienten der Turbine dω_turb, soll/dt einstellt. Das hierfür notwendige Kupplungsmoment wird mit M_k,soll bezeichnet. Man erhält:

$$M\_k,soll = M\_ turb* - \Theta\_turb \cdot d\omega\_turb,soll/dt \tag{7}$$

mit M_ turb* dem berechneten Turbinenmoment aus dem im Rechner abgelegten Kennlinien. Ist dieses Kupplungsmoment bekannt, so kann der hierzu notwendige Kupplungssolldruck p_k,soll und Sollstrom I_k,soll berechnet werden.

$$p\_k,soll = M\_k,soll /(\mu\_reib \cdot r \cdot z \cdot A) + F\_\varnothing/A \tag{8}$$

$$I\_k,soll = f^{-1} (p\_k,soll) \tag{9}$$

Der Vorteil dieser modellbasierten Regelung ist, daß durch die Kenntnis des Einflusses der Störgröße M_ turb* auf die Regelstrecke ein Korrekturglied eingefügt wird, das die funktionale Abhängigkeit der Regelgröße von der Störgröße, d.h. das Verhalten der Regelstrecke in Reaktion auf die Störgröße berücksichtigt, sodaß die Abhängigkeit der Regelgröße von der Störgröße durch diese vorgeschaltete Korrekur minimiert wird. Zudem können vorhandene Nichtlinearitäten, z. B. Reibungskoeffizient, Druck-Strom-Kennlinie (6) eliminiert werden. Das System, bestehend aus Korrekturglied und Regelstrecke stellt damit eine nahezu lineare Ersatz-Regelstrecke dar.

In einer vorteilhaften Ausgestaltung der Erfindung wird der Turbinensollgradient dω_turb,soll/dt von einem Proportional-Integral-Differential-Regler eingestellt. Dieser Regler berechnet aus der aktuellen Turbinendrehzahl ω_turb,ist und der Solldrehzahl ω_turb,soll den Sollgradienten dω_turb,soll/dt, welcher Eingangsgröße in ein Korrekturglied ist. Der Sollwert ω_turb,soll ist zum geregelten Schließen einer Reibschlußverbindung gleich der Winkelgeschwindigkeit des Getriebeeingangs bzw. der Primärscheibe des Variators eines Umschlingungsgetriebes mit stufenlos veränderlicher Übersetzung: ω_turb,soll = ω_S1.

Bei Eingabe obiger Kenngrößen als Parameter in den Algorithmus des Korrekturgliedes zur Regelung wird die Abstimmung des Getriebes bei unterschiedlichen Motoren und Wandler erheblich vereinfacht.

Diese modellbasierte Regelung hat gegenüber konventionellen Regelungen den Vorteil, daß sie für die verschiedensten möglichen Leistungsanforderungen des Fahrers während des Schließens der Reibschlußverbindung ein darauf abgestimmtes, gleichermaßen komfortables Anfahren ermöglicht. Die Art der Regelung ist dabei mit und ohne Leistungsanforderung dieselbe, d. h. es müssen keine Sonderfunktionen der Regelung für Anfahren unter Motorleistungsanforderung geschaltet werden.

Vorzugsweise ist in der Regelung ein Notfallprogramm vorgesehen, falls die modellbasierte Regelung die Reibschlußverbindung nach Ablauf einer definierten Zeit nach dem Einstellen des Fahrtrichtungsvorwahlhebels auf Vorwärts- oder Rückwärtsfahrt nicht vollständig schließen kann. In diesem Fall wird die Reibschlußverbindung über eine vorgegebene Schließrampe gesteuert geschlossen. Anderenfalls würde unter Umständen der Motor unverhältnismäßig hochdrehen. Die Verluste im Antriebsstrang wären hoch und die Reibschlußverbindung würde zu stark abgenutzt.

Bei Bedarf kann diese maximal zulässige Schließzeit der Reibschlußverbindung in einem Kennfeld als Funktion von Fahrzeuggröße, wie Drosselklappenstellung, Motormoment und/oder Getriebeöltemperatur abgelegt werden.

In einer vorteilhaften Ausgestaltung der Erfindung wird nach dem Unterschreiten einer Mindestdrehzahldifferenz zwischen Turbine und Getriebeeingang die Reibschlußverbindung durch ein sprungartiges Anheben des Steuerdrucks der Reibschlußverbindung geschlossen.

Vorzugsweise ist der Steuerdruckendwert der Reibschlußverbindung in einer Weise begrenzt, daß das maximal übertragene Drehmoment geringer ist als das des Kraftübertragungselements im Variator eines Umschlingungsgetriebes mit stufenlos variabler Übersetzung. Damit wird auch bei Drehmomentspitzen in jedem Fall ein Durchrutschen des Kraftübertragungselements des Umschlingungsgetriebes vermieden, das zu einer Zerstörungs des Umschlingungsgetriebes führen kann.

Vorzugsweise werden die Regelparameter auf die Temperatur kompensiert. Damit wird der Veränderung der Viskosität des Getriebeöls mit der Temperatur Rechnung getragen.

In einer Zeichnung ist eine Ausgestaltung der Erfindung dargestellt.

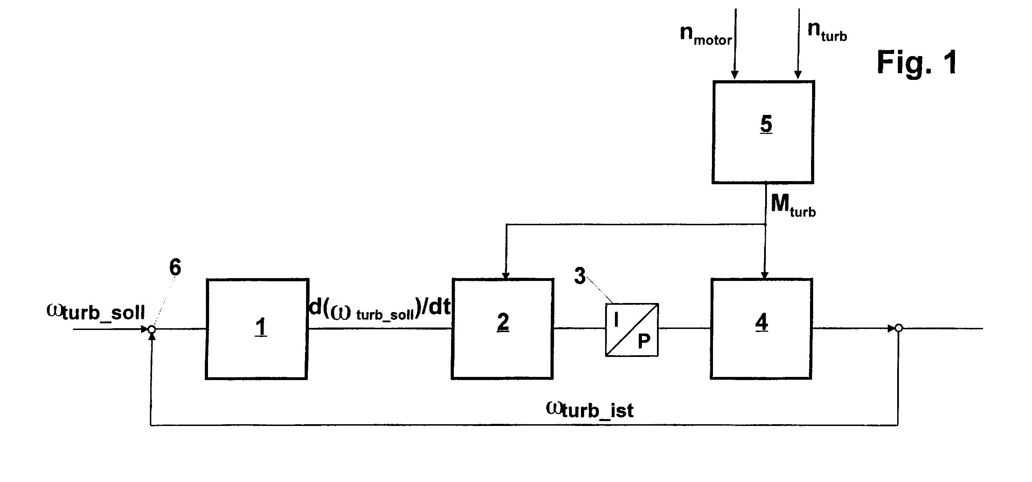

Es zeigt Fig. 1 einen Regelkreis zum Schließen einer Reibschlußverbindung.

Ein Regler 1 regelt über ein Korrekturglied 2 und einen Strom-Druck-Wandler 3 als Regelstrecke 4 eine Reibschlußverbindung, in die als Störgröße das Turbinendrehmoment M_turb eines hydrodynamischen Wandlers 5 eingeht. Eingangsgrößen des Regelkreises sind als Führungsgröße der Sollwert der Winkelgeschwindigkeit der Wandlerturbine ω_turb,soll und als Störgröße das Turbinendrehmoment M_turb. Ausgangsgröße des Regelkreises ist der Istwert der Winkelgeschwindigkeit der Wandlerturbine ω_turb,ist. Dieser Istwert wird mit der Führungsgröße ω_turb, soll am Summationspunkt 6 verglichen. Der Vergleich ergibt die Regeldifferenz, die Eingangsgröße des Reglers 1 ist. Dessen Ausganggröße ist der Sollwert der zeitlichen Ableitung der Winkelgeschwindigkeit der Wandlerturbine d(ω_turb,soll)/dt, der wiederum Eingangsgröße in das Korrekturglied 2 ist. Das Korrekturglied 2 berücksichtigt genau die funktionale Abhängigkeit der Regelgröße von der Störgröße, d. h. das Verhalten der Regelstrecke 4 in Reaktion auf die Störgröße, sodaß die komplexe Abhängigkeit der Regelgröße von der Störgröße durch diese vorgeschaltete Korrektur zu einer einfachen Abhängigkeit der Regelgröße von einer um diese funktionale Abhängigkeit korrigierten Störgröße wird. Ausgangsgröße des Korrekturglieds 2 ist ein Stromwert, der von dem Strom-Druck-Wandler 3 in einen Druckwert umgesetzt wird. Dieser Strom-Druck-Wandler 3 ist üblicherweise ein elektromagnetischer Druckregler. Dieser Druckwert ist Eingangsgröße in die Regelstrecke 4. Ausgangsgröße der Regelstrecke 4 ist der Istwert der Winkelgeschwindigkeit der Wandlerturbine ω_turb,ist. Das System aus Korrekturglied 2, Strom-Druck-Wandler 3 und Regelstrecke 4 bildet eine nahezu lineare Ersatz-Regelstrecke. Dies hat zum Vorteil, daß als Regler 1 ein leicht abstimmbarer Proportional-Integral-Differential-Regler verwendet werden kann, welcher in erster Näherung unabhängig von der verwendeten Kupplungsgeometrie und dem verwendeten Wandlers ist.

Bezugszeichen

1 Regler
2 Korrekturglied
3 Strom-Druck-Wandler
4 Regelstrecke
5 Wandler
6 Summationspunkt

**Patentansprüche**

1. Regelung zum Schließen einer Reibschlußverbindung bei einem Kraftfahrzeug mit Automatgetriebe, das einen hydrodynamischen Wandler (5), mindestens einen Planetenradsatz, mindestens zwei schaltbare Reibschlußverbindungen beinhaltet, die vorzugsweise als Reibungskupplungen bzw. Getriebebremsen ausgebildet sind, wobei der Betätigungszylinder der für die vorbestimmte Fahrtrichtung zu schließenden Reibschlußverbindung nach erfolgter Fahrtrichtungsvorwahl mit Hydraulikflüssigkeit vorbefüllt wird, bis die Reibflächen spielfrei aneinander liegen, und die für die vorbestimmte Fahrtrichtung zu lösende Reibschlußverbindung getrennt wird, dadurch **gekennzeichnet**, daß die zu schließenden Reibschlußverbindung in einer Weise geregelt geschlossen wird, daß das Kraftfahrzeug im Motorleerlauf wie auch für beliebige Gasanforderungen ruckfrei ohne unverhältnismäßiges Hochdrehen des Motors anfährt, indem der Hydraulikdruck als Funktion der Zeit hochgeregelt wird, wobei die Regelung einen modellbasierenden Regelalgorithmus besitzt, in den die Drehzahlen vom Motor, respektive Wandlerpumpenrad und vom Wandlerturbinenrad, respektive Reibschlußverbindung-Primärseite sowie das Trägheitsmoment des Motors und das der Wandler-Turbine und das Drehmoment von Motor, Wandlerpumpenrad, Wandlerturbinenrad, Nebenaggregat-Verbraucher und Reibschlußverbindung sowie die Wandlerkennlinien als Parameter bzw. Eingangsgrößen eingehen.

2. Regelung nach Anspruch 1, dadurch **gekennzeichnet**, daß für die Eingangsgrößen in den modellbasierten Regelalgorithmus das gekoppelte Differentialgleichungssystem gilt:

$$d\omega\_motor/dt = 1/\Theta\_motor \cdot [M\_motor-M\_verbr-M\_p],$$

$$d\omega\_turb/dt = 1/\Theta\_turb \cdot [M\_ turb-M\_k],$$

mit:

| | |
|---|---|
| $\omega\_motor$ | Winkelgeschwindigkeit des Motors, |
| t | Zeit, |
| $\Theta\_motor$ und | Trägheitsmoment von Motor, Wandlerpumpenrad Verbindungswellen, |
| M_motor | Drehmoment des Motors, |
| M_verbr | Drehmoment der Nebenaggregat-Verbraucher, |
| M_p | Drehmoment des Wandlerpumpenrades, |
| $\omega\_turb$ | Winkelgeschwindigkeit des Wandlerturbinenrades, |
| $\Theta\_turb$ | Trägheitsmoment von Wandler-Turbine, Kupplungseingangsseite und Verbindungswellen, |
| M_turb | Drehmoment des Wandlerturbinenrades, |
| M_k | Drehmoment der Reibungskupplung, |

wobei die Kopplung der Differentialgleichungen durch die Wandlerkennlinle $\mu$ über die Beziehung M_turb=$\mu \cdot$M_p =$\mu(\nu) \cdot$M_p gegeben ist, wobei $\nu$ das Drehzahlverhältnis $\omega\_turb/\omega\_motor$ ist, und diese Gleichungen in ein modellbasierten Regelkonzept eingearbeitet werden, wobei das Soll-Übertragungsdrehmoment der Reibschlußverbindung M_k,soll durch den der Sollwert der zeitlichen Ableitung der Winkelgeschwindigkeit der Wandlerturbine d($\omega\_turb,soll)/dt über die Beziehung M_k/soll = M_ turb*- $\Theta\_turb \cdot$d$\omega\_turb,soll/dt bestimmt wird, wobei M_ turb* das berechneten Turbinenmoment aus dem im Rechner abgelegten Kennlinien ist.

3. Regelung nach Anspruch 2, dadurch **gekennzeichnet**, daß das Drehmoment der Wandlerpumpe M_p durch die Beziehung M_p = M_p,ref($\nu) \cdot \omega^2$_motor/$\omega^2$_ref bestimmt wird, wobei $\omega\_ref die Winkelgeschwindigkeit ist, bei der die Wandlerkennlinien $\mu(\nu)$ und M_p,ref($\nu)$ vermessen werden und $\nu$ das Drehzahlverhältnis: $\nu = \omega\_turb/\omega\_motor$ ist.

4. Regelung nach Anspruch 3, dadurch **gekennzeichnet**, daß die Reibschlußverbindung von einer Betätigungseinrichtung über ein Druckmittel mit Kraft beaufschlagt und der Sollwert des Drucks p_k,soll in der Betätigungseinrichtung über die Beziehung

$$p\_k,soll = M\_k,soll /(\mu\_reib \cdot r \cdot z \cdot A)+ F\_\varnothing/A$$

bestimmt wird, mit:

| | |
|---|---|
| M_k | Drehmoment der Reibungskupplung, |
| $\mu\_reib$ | Reibungskoeffizent der Reibungskupplung, |
| r | effektiver Reibradius, |
| z | Anzahl der Reibflächen, |
| A | Kolbenfläche der Betätigungseinrichtung der Rei bungskupplung, |
| p_k | Druck im der Betätigungseinrichtung der Reibungskupplung, |
| $F\_\varnothing$ | Minimalkraft zur Drehmomentübertragung. |

5. Regelung nach Anspruch 4, dadurch **gekennzeichnet**, daß der Druck p_k der Betätigungseinrichtung der Reibschlußverbindung durch ein elektromagnetisches Druckregelventil geregelt wird, das über den Strom durch seine Magnetspule angesteuert wird und die Abhängigkeit des Drucks p_k vom Spulenstrom I_k, d. h. die Funktion p_k = f(I_k) in einer Kennlinie abgelegt ist und aus dieser Kennlinie der Regel-Spulenstrom für das elektromagnetisches Druckregelventil I_k,soll = f$^{-1}$(p_k,soll) ermittelt wird.

6. Regelung nach Anspruch 1 oder 2, dadurch **gekennzeichnet**, daß der Turbinensollgradient dω_turb,soll/dt von einem Proportional-Integral-Differential-Regler eingestellt wird und dieser Regler (1) aus der aktuellen Turbinenwinkelgeschwindigkeit ω_turb,ist und der Sollwinkelgeschwindigkeit ω_turb,soll den Sollgradienten dω_turb,soll/dt berechnet, welcher Eingangsgröße in ein Korrekturglied (2) ist, wobei der ω_turb,soll zum geregelten Schließen einer Reibschlußverbindung gleich der Winkelgeschwindigkeit des Getriebeeingangs ω_S1 ist.

7. Regelung nach Anspruch 1 oder 2, dadurch **gekennzeichnet**, daß in der Regelung ein Notfallprogramm vorgesehen ist, das, falls die modellbasierte sRegelung die Reibschlußverbindung nach Ablauf einer definierten Zeit nach dem Einstellen des Fahrtrichtungsvorwahlhebels auf Vorwärts- oder Rückwärtsfahrt nicht vollständig schließen kann, die Reibschlußverbindung über eine vorgegebene Schließrampe schließt.

8. Regelung nach Anspruch 7, dadurch **gekennzeichnet**, daß die maximal zulässige Schließzeit der Reibschlußverbindung in einem Kennfeld als Funktion von Fahrzeuggröße, wie Drosselklappenstellung, Motormoment und/oder Getriebeöltemperatur abgelegt ist.

9. Regelung nach Anspruch 1 oder 2, dadurch **gekennzeichnet**, daß nach dem Unterschreiten einer Mindestdrehzahldifferenz zwischen Turbine und Getriebeeingang die Reibschlußverbindung durch ein sprungartiges Anheben des Steuerdrucks der Reibschlußverbindung geschlossen wird.

10. Regelung nach Anspruch 1 oder 2, dadurch **gekennzeichnet**, daß der Steuerdruckendwert der Reibschlußverbindung in einer Weise begrenzt ist, daß das maximal übertragene Drehmoment geringer ist als das des Kraftübertragungselements im Variator eines Umschlingungsgetriebes mit stufenlos variabler Übersetzung.

11. Regelung nach Anspruch 1, dadurch **gekennzeichnet**, daß Regelparameter temperaturkompensiert werden.

**Claims**

1. Control for closing a frictional connection in a motor vehicle with an automatic transmission, which comprises a hydrodynamic converter (5), at least one planet wheel set, at least two operable frictional connections, which preferably take the form of friction clutches and/or transmission brakes, wherein the operating cylinder of the frictional connection, which is to be closed for the predetermined direction of travel, after selection of the direction of travel is pre-filled with hydraulic fluid until the friction faces lie without play against one another, and the frictional connection, which is to be opened for the predetermined direction of travel, is disconnected, characterized in that the frictional connection, which is to be closed, is closed in a controlled manner such that the motor vehicle during no-load operation of the engine as well as for any acceleration requirements starts smoothly without excessive revving of the engine in that the hydraulic pressure is adjusted upwards as a function of time, wherein the control has a model-based control algorithm, into which the rotational speeds of the engine, and/or converter pump wheel and of the converter turbine wheel, and/or frictional connection primary side as well as the moment of inertia of the engine and of the converter turbine and the torque of engine, converter pump wheel, converter turbine wheel, auxiliary equipment consumer and frictional connection as well as the converter characteristic curves are incorporated as parameters and/or input quantities.

2. Control according to claim 1, characterized in that for the input quantities entered into the model-based control algorithm the simultaneous differential equation system applies:

$$d\omega\_motor/dt = 1/\theta\_motor \cdot [M\_motor-M\_verbr-M\_p],$$

$$d\omega\_turb/dt = 1/\theta\_turb \cdot [M\_turb-M\_k],$$

with:

$\omega$_motor   angular velocity of engine,

t        time,

$\theta$_motor   moment of inertia of engine, converter pump wheel and connection shafts,

M_motor   torque of engine,

M_verbr   torque of auxiliary equipment consumers,

M_p     torque of converter pump wheel,

$\omega$_turb   angular velocity of converter turbine wheel,

$\theta$_turb    moment of inertia of converter turbine, clutch input side and connection shafts,

M_turb   torque of converter turbine wheel,

M_k     torque of friction clutch,

wherein the linking of the differential equations by the converter characteristic curve $\mu$ is provided via the relationship $M\_turb = \mu \cdot M\_p = \mu(v) \cdot M\_p$, in which v is the rotational speed ratio $\omega$_turb/$\omega$_motor, and said equations are incorporated into a model-based control concept, wherein the setpoint transmission torque of the frictional connection M_k,soll is determined by the setpoint value of the time derivative of the angular velocity of the converter turbine $d(\omega$_turb,soll$)/dt$ via the relationship $M\_k,soll = M\_turb \cdot - \theta\_turb \cdot d\omega\_turb,soll/dt$, in which $M\_turb \cdot$ is the calculated turbine torque from the characteristic curves filed in the computer.

3. Control according to claim 2, characterized in that the torque of the converter pump M_p is determined by means of the relationship $M\_p = M\_p,ref(v) \cdot \omega^2\_motor/\omega^2\_ref$, in which $\omega$_ref is the angular velocity at which the converter characteristic curves $\mu(v)$ and M_p,ref(v) are measured and v is the rotational speed ratio: $v = \omega$_turb/$\omega$_motor.

4. Control according to claim 3, characterized in that the frictional connection is loaded by an operating device with force via a pressure medium and the setpoint value of the pressure p_k,soll in the operating device is determined via the relationship

$$p\_k,soll = M\_k,soll \ / \ (\mu\_reib \cdot r \cdot z \cdot A) + F\_\varnothing/A,$$

with:

M_k     torque of friction clutch,

$\mu$_reib   coefficient of friction of friction clutch,

r        effective friction radius,

z        number of friction faces,

A        piston area of operating device of friction clutch,

p_k      pressure in operating device of friction clutch,

F_$\varnothing$     minimal force for torque transmission.

5. Control according to claim 4, characterized in that the pressure p_k of the operating device of the frictional connection is regulated by an electromagnetic pressure control valve, which is activated by the current through its magnet coil, and the dependence of the pressure p_k upon the coil current I_k, i.e. the function $p\_k = f(I\_k)$, is filed in a characteristic curve and from said characteristic curve the control coil current for the electromagnetic pressure control valve $I\_k,soll = f^{-1}(p\_k,soll)$ is determined.

6. Control according to claim 1 or 2, characterized in that the turbine setpoint gradient d$\omega$_turb,soll/dt is adjusted by a proportional-plus-integral-plus-derivative controller and said controller (1) calculates from the actual turbine angular velocity $\omega$_turb,ist and the setpoint angular velocity $\omega$_turb,soll the setpoint gradient d$\omega$_turb,soll/dt, which is an input quantity entered into a correction element (2), wherein the $\omega$_turb,soll for controlled closing of a frictional connection is equal to the angular velocity of the transmission input $\omega$_S1.

7. Control according to claim 1 or 2, characterized in that provided in the control is an emergency program which, in the event that the model-based control is unable to close the frictional connection completely at the end of a defined time after the travel direction selector lever has been set to forward drive or reverse, closes the frictional connection by means of a preset closing ramp.

8. Control according to claim 7, characterized in that the maximum admissible closing time of the frictional connection is filed in a characteristics map as a function of a vehicle variable, such as throttle valve position, engine torque and/or transmission oil temperature.

9. Control according to claim 1 or 2, characterized in that, after a drop below a minimum rotational speed difference between turbine and transmission input, the frictional connection is closed by an abrupt raising of the control pressure of the frictional connection.

10. Control according to claim 1 or 2, characterized in that the control pressure final value of the frictional connection is limited such that the maximum transmitted torque is lower than that of the power transmission element in the variator of a perpetually infinitely variable transmission.

11. Control according to claim 1, characterized in that the control parameters are temperature-compensated.

**Revendications**

1. Asservissement pour serrer une liaison à friction dans un véhicule automobile équipé d'une boîte de vitesses automatique qui comprend un convertisseur hydrodynamique (5), au moins un train d'engrenages planétaires, au moins deux liaisons à friction pouvant être commandées, qui sont de préférence constituées par des embrayages à friction ou des freins de boîte de vitesses, le cylindre d'actionnement de la liaison à friction qui doit être serrée pour le sens de marche prédéterminé étant prérempli de liquide hydraulique après exécution de la présélection du sens de marche, jusqu'à ce que les surfaces de friction soient en contact entre elles sans jeu, et jusqu'à ce que la liaison à friction qui doit être relâchée pour le sens de marche prédéterminé soit desserrée, **caractérisé** en ce que la liaison à friction à serrer est serrée de façon asservie d'une façon telle qu'au ralenti du moteur aussi bien que pour toutes les demandes de gaz, le véhicule automobile démarre sans à-coup et sans montée en vitesse disproportionnée du moteur grâce au fait que la pression hydraulique est élevée de façon asservie en fonction du temps, l'asservissement possédant un algorithme d'asservissement basé sur modèle, dans lequel interviennent en tant que paramètres ou grandeurs d'entrée les vitesses de rotation du moteur, respectivement de la roue de pompe du convertisseur et de la roue de turbine du convertisseur, le côté primaire correspondant de la liaison à friction ainsi que le moment d'inertie du moteur et celui de la turbine du convertisseur, et le couple du moteur, de la roue de pompe du convertisseur, de la roue de turbine du convertisseur, des consommateurs-groupes auxiliaires et de la liaison à friction, ainsi que les courbes caractéristiques du convertisseur.

2. Asservissement selon la revendication 1, **caractérisé** en ce que, pour les grandeurs d'entrée dans l'algorithme d'asservissement basé sur modèle, on a le système d'équations différentielles couplées :

$$d\omega\_moteur/dt = 1/\Theta\_moteur \cdot [M\_moteur-M\_consom-M\_p],$$

$$d\omega\_turb/dt = 1/\Theta\_turb \cdot [M\_turb-M\_k],$$

où:

| | |
|---|---|
| $\omega$\_moteur | vitesse angulaire du moteur, |
| t | temps, |
| $\Theta$\_moteur | moment d'inertie du moteur, de la roue de pompe du convertisseur et des arbres de liaison, |
| M\_moteur | couple du moteur, |
| M\_consom | couple des consommateurs-groupes auxiliaires, |
| M\_p | vitesse angulaire de la roue de pompe du convertisseur, |
| $\omega$\_turb | vitesse angulaire de la roue de turbine du convertisseur, |
| $\Theta$\_turb | moment d'inertie de la turbine du convertisseur, du côté d'entrée de l'embrayage et des arbres de liaison, |
| M\_turb | couple de la roue de turbine du convertisseur, |
| M\_k | couple de l'embrayage à friction, |

où le couplage des équations différentielles est donné par la courbe caractéristique $\mu$ du convertisseur, en passant par la relation M\_turb=$\mu \cdot$ M\_p = $\mu(\nu) \cdot$ M\_p, où $\nu$ est le rapport de vitesses de rotation $\omega$\_turb/$\omega$\_moteur, et ces équations sont incorporées dans un concept d'asservissement basé sur un modèle, où le couple de transmission de consigne de la liaison à friction M_k,cons est déterminé par la valeur de consigne de la dérivée de la vitesse angulaire de la turbine du convertisseur par rapport au temps d($\omega$_turb,cons)/dt, en passant par la relation M_k, cons = M_turb* - $\Theta$_turb$\cdot$ d$\omega$_turb,cons/dt, où M_turb* est le couple de la turbine calculé à partir de la courbe caractéristique mémorisée dans l'ordinateur.

3. Asservissement selon la revendication 2, **caractérisé** en ce que le couple de la pompe du convertisseur M_p est déterminé par la relation M_p = M_p,réf($\nu$)$\cdot$ $\omega^2$_moteur/m$^2$_réf, où $\omega$_réf est la vitesse angulaire à laquelle les courbes caractéristiques du convertisseur $\mu(\nu)$ et M_p,réf($\nu$) sont mesurées et $\nu$ est le rapport de vitesses de rotation : $\nu$ = $\omega$_turb/$\omega$_moteur.

4. Asservissement selon la revendication 3, **caractérisé** en ce que la liaison à friction est chargée avec une force par un dispositif d'actionnement, par l'intermédiaire d'un agent de pression, et la valeur de consigne de la pression p_k,cons est déterminée dans le dispositif d'actionnement en passant par la relation

$$p\_k,cons = M\_k,cons / (\mu\_frict \cdot r \cdot z \cdot A) + F\_\varnothing/A,$$

avec :

M_k        couple de l'embrayage à friction,
$\mu$_frict    coefficient de frottement de l'embrayage à friction,
r           rayon de frottement effectif,
z           nombre des surfaces de friction,
A          surface du piston du dispositif d'actionnement de l'embrayage à friction,
p_k        pression dans le dispositif d'actionnement de l'embrayage à friction,
F_$\varnothing$       force minimale pour la transmission du couple.

5. Asservissement selon la revendication 4, **caractérisé** en ce que la pression p_k du dispositif d'actionnement de la liaison à friction est asservie par une valve électromagnétique d'asservissement de la pression qui est pilotée au moyen du courant traversant sa bobine magnétique, et la relation de dépendance de la pression p_k par rapport au courant de la bobine I_k, c'est-à-dire la fonction p_k = f(I_k) est mémorisée dans une courbe caractéristique et le courant de bobine d'asservissement pour la valve électromagnétique d'asservissement de la pression I_k, cons = f$^{-1}$(p_k,cons) est calculé sur la base de cette courbe caractéristique.

6. Asservissement selon la revendication 1 ou 2, **caractérisé** en ce que le gradient de consigne de la turbine d$\omega$_turb, cons/dt est réglé par un régulateur proportionnel-intégral-différentiel et ce régulateur (1) calcule, à partir de la vitesse angulaire actuelle de la turbine $\omega$_turb,réel et de la vitesse angulaire de consigne $\omega$_turb,cons, le gradient de consigne d$\omega$_turb,cons/dt, qui est une grandeur d'entrée dans un organe de correction (2), où $\omega$_turb,cons pour le serrage asservi d'une liaison à friction est égal à la vitesse angulaire de l'entrée de la boîte de vitesses $\omega$_S1.

7. Asservissement selon la revendication 1 ou 2, **caractérisé** en ce que, dans l'asservissement est prévu un programme de secours qui serre la liaison à friction, sur une rampe de serrage prédéterminée, dans le cas où l'asservissement basé sur un modèle ne peut pas serrer entièrement la liaison à friction alors qu'un temps prédéfini s'est écoulé après qu'on a mis le levier de présélection du sens de marche sur la marche avant ou la marche arrière.

8. Asservissement selon la revendication 7, **caractérisé** en ce que le temps de serrage maximum admissible de la liaison à friction est mémorisé dans un diagramme caractéristique en fonction de grandeurs du véhicule, telles que la position du clapet d'étranglement, le couple du moteur et/ou la température de l'huile de la boîte de vitesse.

9. Asservissement selon la revendication 1 ou 2, **caractérisé** en ce que, lorsqu'on est passé en dessous d'une différence minimum de vitesse de rotation entre la turbine et la boîte de vitesses, la liaison à friction est serrée par une élévation brusque de la pression de commande de la liaison à friction.

10. Asservissement selon la revendication 1 ou 2, **caractérisé** en ce que la valeur de la pression de commande de la liaison à friction est limitée de telle manière que le couple maximum transmis soit plus petit que celui de l'élément de transmission de force dans le variateur d'une transmission à poulies à rapport de transmission variable en continu.

**11.** Asservissement selon la revendication 1, **caractérisé** en ce que les paramètres d'asservissement sont compensés en température.

# Fig. 1